# FASCICULE DE BREVET EUROPEEN

(11) **EP 2 957 409 B1**
(45) Date de publication et mention de la délivrance du brevet: **07.06.2017**
(21) Numéro de dépôt: 15172622.1
(22) Date de dépôt: 17.06.2015
(51) Int. Cl.: B29C 45/14, B29C 43/00, A44C 5/00

(54) **PROCÉDÉ DE FABRICATION D'UN ÉLÉMENT D'HABILLAGE COMPOSITE SOUPLE**
HERSTELLUNGSVERFAHREN EINES FLEXIBLEN VERBUNDVERKLEIDUNGSELEMENTS
METHOD FOR MANUFACTURING A FLEXIBLE COMPOSITE TRIM ELEMENT

(30) Priorité: 17.06.2014 CH 9172014
(43) Date de publication de la demande: 23.12.2015
(73) Titulaire: Mestel SA, 1636 Broc (CH)
(72) Inventeur: De Boer, Philip, 1299 Crans-pres-Celigny (CH)
(74) Mandataire: e-Patent SA

(56) Documents cités:
- AT-U1- 12 116
- US-A- 6 071 456

## Description

### Domaine technique

La présente invention concerne un procédé de fabrication d'un élément d'habillage composite, préférablement souple ou déformable, pour les domaines de l'horlogerie, de la bijouterie, de la lunetterie, de la téléphonie mobile ou de la maroquinerie, l'élément d'habillage comportant une enveloppe souple associée à une matrice composée d'un polymère souple.

De manière préférée, le présent procédé peut être mis en oeuvre pour la fabrication d'un composant de bracelet, un composant de bijou, un composant de lunette, un composant de téléphone ou un composant de maroquinerie.

### Etat de la technique

US-A-6,071,456 montre un état de la technique connu. On connaît déjà des éléments d'habillage, notamment utilisés dans le domaine du luxe, qui sont composés de plusieurs matières différentes.

A titre d'exemple, dans le domaine horloger, les bracelets de montres-bracelets sont typiquement réalisés en cuir la plupart du temps, dans le haut de gamme. Depuis quelques années, des bracelets en élastomère ou en caoutchouc sont apparus sur le marché, et ces bracelets sont de plus en plus fréquemment utilisés sur des modèles de montres du haut de gamme, à tendance sportive.

Ces matières permettent la réalisation de bracelets dont la tenue dans le temps est améliorée, par rapport aux bracelets en cuir, en particulier lorsqu'ils sont mis en contact avec de l'eau ou de la sueur.

Aussi, certains bracelets ont été réalisés en associant ces matières, de type élastomère, avec des cuirs typiques du haut de gamme afin d'améliorer la tenue dans le temps de ces bracelets sans en modifier l'apparence lorsque la montre est portée.

Toutefois, ces bracelets comprennent généralement différentes parties constituées de différentes matières qui sont typiquement cousues ou collées les unes avec les autres, ce qui peut conduire à une désolidarisation de ces parties à terme. En outre, l'assemblage de ces différentes parties crée des aspérités dans lesquelles peuvent s'accumuler des saletés, et qui peuvent potentiellement se révéler allergènes puisqu'elles sont proches de la peau du porteur.

Des problématiques similaires existent dans les domaines de la bijouterie, de la lunetterie, de la téléphonie mobile ou de la maroquinerie.

### Divulgation de l'invention

Un but de la présente invention est de proposer une construction améliorée des éléments d'habillage connus de l'art antérieur en proposant un procédé permettant de fabriquer de tels éléments d'habillage présentant une combinaison de matériaux intimement liés les uns aux autres.

A cet effet, la présente invention concerne un procédé de fabrication d'un élément d'habillage composite, préférablement souple, pour les domaines de l'horlogerie, de la bijouterie, de la lunetterie, de la téléphonie mobile ou de la maroquinerie, cet élément d'habillage comportant une enveloppe souple associée à une matrice composée d'un polymère, le procédé comprenant les étapes consistant à:
a) se munir d'un moule présentant une forme interne correspondant sensiblement à la forme finale souhaitée pour l'élément d'habillage,
b) se munir d'une enveloppe susceptible d'épouser au moins une partie de la surface interne du moule, et disposer l'enveloppe dans le moule,
c) introduire une charge à l'intérieur de l'enveloppe, d'une composition destinée à conduire à la formation du polymère suite à un traitement visant à activer la polymérisation et/ou la vulcanisation de cette composition, la charge présentant un volume, à pression ambiante, supérieur au volume interne du moule,
d) soumettre la charge à une pression supérieure à la pression ambiante, pour plaquer ladite enveloppe souple contre la surface interne dudit moule,
e) appliquer le traitement visant à activer la polymérisation et/ou la vulcanisation de la composition.

Grâce à ces caractéristiques, les deux matériaux, de la matrice et de l'enveloppe, sont intimement liés l'un à l'autre, ce qui assure un très haut niveau de robustesse et une excellente tenue dans le temps de l'élément d'habillage ainsi fabriqué.

De plus, du fait de la mise sous pression de la charge, la matrice remplit toutes les aspérités à l'intérieur du moule et l'élément d'habillage obtenu est dépourvu de toute région susceptible de loger des saletés.

Selon une première variante de mise en oeuvre préférée, la charge est injectée sous pression dans l'enveloppe après que le moule ait été fermé.

Dans ce cas, on peut avantageusement prévoir que l'enveloppe souple présente au moins deux faces, délimitant un volume interne et, dont l'une au moins est munie d'une ouverture adaptée pour permettre l'injection de la charge à l'intérieur de l'enveloppe souple.

De plus, on peut également prévoir qu'un insert rigide pourvu d'un trou est solidaire de l'enveloppe souple, de telle manière que le trou de l'insert est agencé sensiblement en regard de l'ouverture de l'enveloppe.

Selon une variante supplémentaire de mise en oeuvre préférée du procédé selon la présente invention, l'étape d) ci-dessus est mise en oeuvre par compression de la charge par fermeture du moule.

De manière générale, l'enveloppe souple peut être réalisée en un ou plusieurs matériaux choisis dans le groupe comprenant les cuirs, les textiles naturels ou synthétiques, les métaux ou alliages métalliques, les céramiques.

Par ailleurs, la matrice peut avantageusement être composée d'un ou plusieurs matériaux choisis dans le groupe comprenant les élastomères, les matières siliconées, les matières plastiques.

Selon une autre variante de mise en oeuvre, on peut prévoir que le procédé comporte une étape supplémentaire de fabrication d'un élément d'habillage supplémentaire consistant à effectuer un surmoulage de l'élément d'habillage obtenu après mise en oeuvre de l'étape e) ci-dessus avec un composant constitué d'un ou plusieurs matériaux choisis dans le groupe comprenant les élastomères, les matières siliconées, les matières plastiques.

De manière générale, le procédé est préférablement mis en oeuvre avec un moule, une enveloppe et une matrice pour la fabrication d'un composant de bracelet, un composant de bijou, un composant de lunette, un composant de téléphone ou un composant de maroquinerie.

La présente invention concerne également un élément d'habillage composite, préférablement souple, pour les domaines de l'horlogerie, de la bijouterie, de la lunetterie, de la téléphonie mobile ou de la maroquinerie fabriqué par la mise en oeuvre d'un procédé de fabrication selon les caractéristiques qui viennent d'être énoncées.

### Brève description des dessins

D'autres caractéristiques et avantages de la présente invention apparaîtront plus clairement à la lecture de la description détaillée de modes de réalisation préférés qui suit, faite en référence aux dessins annexés donnés à titre d'exemples non limitatifs et dans lesquels:
- la figure 1 représente une vue schématique de côté d'un brin de bracelet de montre illustrant un exemple de mise en oeuvre préférée du procédé selon l'invention;
- la figure 2 représente une vue schématique de dessus, en transparence partielle, du brin de bracelet de la figure 1;
- la figure 3 représente une vue schématique en coupe transversale illustrant une première étape d'une variante de mise en oeuvre du procédé selon l'invention;
- la figure 4 représente une vue schématique en coupe transversale illustrant une deuxième étape de la variante de mise en oeuvre du procédé de la figure 3;
- la figure 5 représente une vue schématique en coupe transversale illustrant une troisième étape de la variante de mise en oeuvre du procédé de la figure 3, et
- la figure 6 représente une vue schématique latérale illustrant une étape supplémentaire de mise en oeuvre d'une variante de réalisation préférée supplémentaire du procédé selon l'invention.

### Mode(s) de réalisation de l'invention

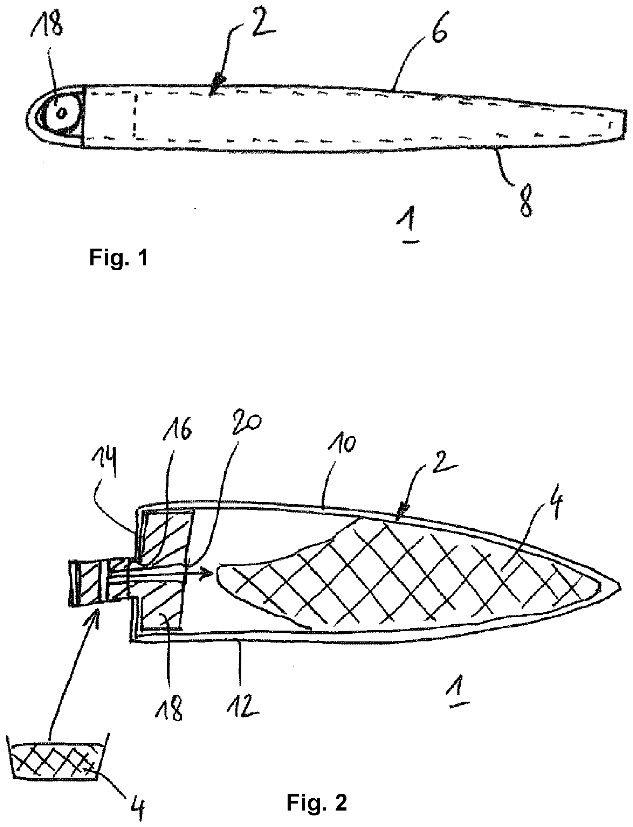

Les figures 1 et 2 illustrent la mise en oeuvre d'une première variante préférée de mise en oeuvre du procédé de fabrication selon la présente invention. Plus précisément, les figures 1 et 2 illustrent la fabrication d'un brin 1 de bracelet de montre composite selon la présente invention.

De manière générale, la mise en oeuvre du procédé selon la présente variante de réalisation préférée comprend les étapes consistant à:
a) se munir d'un moule (non représenté) présentant une forme interne correspondant sensiblement à la forme finale souhaitée pour le brin de bracelet,
b) se munir d'une enveloppe 2 susceptible d'épouser au moins une partie de la surface interne du moule, et disposer l'enveloppe dans le moule,
c) introduire une charge 4 à l'intérieur de l'enveloppe 2, d'une composition destinée à conduire à la formation dudit polymère suite à un traitement visant à activer la polymérisation et/ou la vulcanisation de cette composition, la charge 4 présentant un volume, à pression ambiante, supérieur au volume interne du moule,
d) soumettre la charge à une pression supérieure à la pression ambiante,
e) appliquer le traitement visant à activer la polymérisation et/ou la vulcanisation de la composition.

Dans le cadre de la présente variante de mise en oeuvre, l'enveloppe souple 2 est réalisée en un ou plusieurs matériaux choisis dans le groupe comprenant les cuirs, les textiles naturels ou synthétiques, les métaux ou alliages métalliques, voire des céramiques.

En outre, l'enveloppe 2 présente ici une pluralité de faces 6, 8, 10, 12, 14 délimitant un volume interne à l'intérieur duquel la charge 4 peut être injectée sous pression.

A cet effet, la face 14 présente une ouverture 16 destinée à permettre l'injection de la charge 4 à l'intérieur de l'enveloppe 2.

Pour améliorer la mise en oeuvre de l'étape d'injection, un insert 18 est agencé à l'intérieur de l'enveloppe 2, de manière optionnelle, en étant solidaire de cette dernière. L'insert est pourvu d'un trou 20, agencé en regard de l'ouverture 16, définissant une communication entre l'extérieur et l'intérieur de l'enveloppe 2.

L'injection de la charge 4 peut être réalisée à froid ou à chaud, en fonction de la composition utilisée et du résultat final souhaité.

De manière similaire, la pression d'injection de la charge 4 dans l'enveloppe 2 peut être ajustée pour conduire à l'apparence finale souhaitée pour le brin de bracelet, et pour prendre en compte le matériau constituant l'enveloppe 2.

Une pression d'injection plus élevée conduit bien entendu à une liaison plus intime, entre l'enveloppe 2 et la matrice résultant de la polymérisation et/ou la vulcanisation de la charge 4, qu'une pression plus faible.

Des variations de la température et de la pression de travail vont également conduire à des résultats différents en fonction du matériau constituant l'enveloppe, notamment en termes de texture de la surface du brin de bracelet et en termes de coloration.

L'homme du métier ne rencontrera pas de difficulté particulière pour choisir des paramètres adaptés à ses propres besoins et au résultat souhaité, sans sortir du cadre de la présente invention.

Lors de l'injection de la charge sous pression, l'enveloppe 2 est plaquée contre les parois internes du moule qu'elle épouse pour en prendre la forme. Cette forme est ensuite figée par la mise en oeuvre du traitement visant à activer la polymérisation et/ou la vulcanisation de la charge 4.

Ainsi, il est par exemple possible de prévoir qu'au moins une paroi du moule est gravée avec des inscriptions, comme une marque ou un logo, pour reproduire cette inscription en relief dans le brin de bracelet finalement obtenu.

Le procédé qui vient d'être décrit peut être mis en oeuvre pour la fabrication de tout autre élément d'habillage des domaines de la bijouterie, de la lunetterie, de la téléphonie mobile ou de la maroquinerie, sans sortir du cadre de la présente invention. L'homme du métier ne rencontrera pas de difficulté particulière pour adapter l'enseignement qui précède en fonction de ses propres besoins.

Des alternatives de mise en oeuvre sont possibles sans sortir du cadre de la présente invention. A titre d'exemple, l'enveloppe peut comporter un nombre de faces réduit conduisant à une structure ouverte. Dans ce cas, certains côtés de l'élément d'habillage obtenu sont conformés directement par les parois correspondantes du moule.

On notera que le volume interne de l'enveloppe peut n'être que partiellement fermé et dans certains cas, l'homme du métier pourra décider de retirer l'insert après fabrication de l'élément d'habillage sans sortir du cadre de la présente invention.

De manière générale, l'enveloppe peut être constituée de plusieurs portions rapportées, par exemple par collage, par des coutures ou en étant soudées les unes aux autres. En fonction de la pression appliquée lors de l'injection, la charge pénètre dans toutes les aspérités éventuelles qui pourraient résulter de la fabrication de l'enveloppe, renforçant ainsi cette dernière.

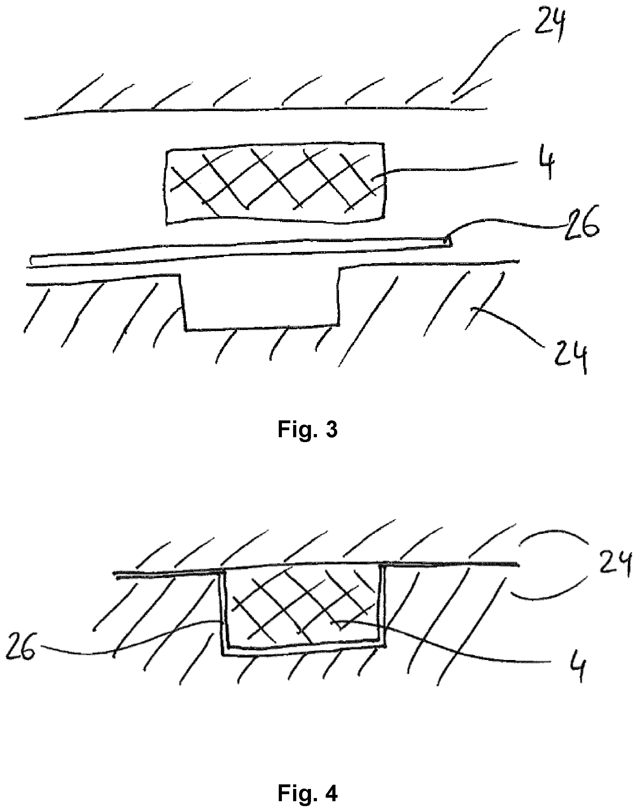

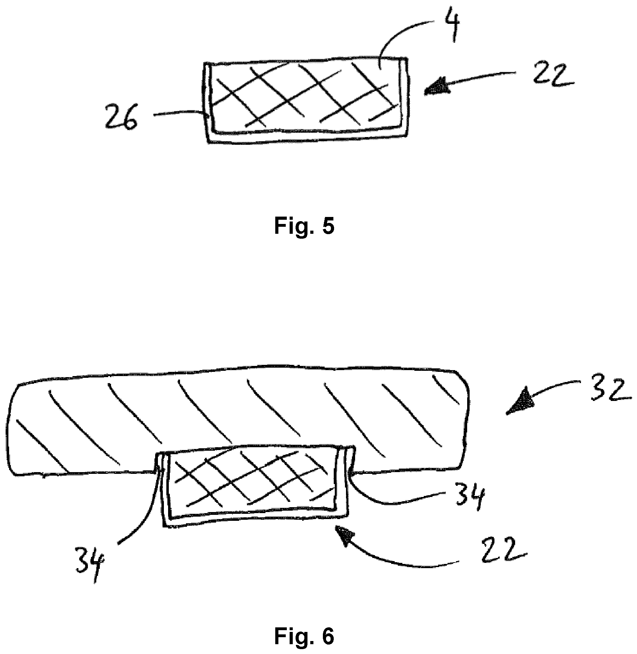

Les figures 3, 4 et 5 illustrent une deuxième variante de réalisation, en relation avec un élément d'habillage 22 (figure 5) quelconque.

Selon la présente variante, on utilise ici un moule 24 représenté dans sa configuration ouverte sur la figure 3.

Une enveloppe 26 ouverte, c'est-à-dire ne délimitant pas de volume interne, est positionnée en regard d'une partie du moule 24.

Une charge 4 est placée sur l'enveloppe 26 dans le moule 24, celle-ci présentant un volume à pression ambiante supérieur au volume interne du moule.

Ainsi, lorsque le moule 24 est fermé, tel qu'illustré sur la figure 4, la charge 4 est appliquée contre l'enveloppe 26 qui est elle-même appliquée contre les parois de moule 24 auxquelles elle est associée ici.

En fonction de l'importance de la charge 4, en référence au volume interne du moule 24, la fermeture de ce dernier entraîne l'application d'une pression plus ou moins importante sur la charge 4 et donc l'établissement d'une liaison plus ou moins intime entre la charge 4 et l'enveloppe 26.

Comme précédemment, la forme définie par le moule 24 est ensuite figée par la mise en oeuvre du traitement visant à activer la polymérisation et/ou la vulcanisation de la charge 4.

La mise en oeuvre de cette deuxième variante de réalisation est soumise aux mêmes fluctuations que celles exposées plus haut en relation avec la première variante de réalisation, notamment en fonction de la température, de la pression, et des différents matériaux impliqués.

De même, tout type d'élément d'habillage peut être réalisé de la manière qui vient d'être décrite dans les domaines de la bijouterie, de la lunetterie, de la téléphonie mobile ou de la maroquinerie, sans sortir du cadre de la présente invention. L'homme du métier ne rencontrera pas de difficulté particulière pour adapter l'enseignement qui précède en fonction de ses propres besoins.

La figure 6 illustre une étape supplémentaire qui peut être mise en oeuvre en relation avec un élément d'habillage obtenu par la mise en oeuvre du procédé selon la présente invention.

L'élément d'habillage 22 peut faire l'objet d'un surmoulage dans le cadre de la fabrication d'un élément d'habillage supplémentaire 32.

Dans ce cas, il peut être avantageux de prévoir une rainure 34 autour de l'élément surmoulé 22 afin d'améliorer l'esthétique de l'ensemble et de limiter les risques d'accrochage au niveau de l'interface. En effet, une telle rainure 34 permet de dissimuler au moins partiellement les transitions de matière entre les différentes parties de l'élément d'habillage supplémentaire 32.

Grâce au procédé de fabrication qui vient d'être décrit, il est possible de réaliser des variations quasi-infinies d'éléments d'habillage composites souples, en termes de texture (visuel et toucher), de couleur, de rigidité/souplesse, en faisant varier les matériaux employés, les conditions de mise en oeuvre des étapes du procédé, plus particulièrement la pression, etc...

De plus, les éléments d'habillage ainsi fabriqués présentent une excellente tenue dans le temps, même lorsqu'ils sont mis en contact avec de l'eau ou avec de la sueur. A titre d'exemple, un cuir fortement imprégné par un élastomère devient ainsi insensible à l'eau, ce qui est particulièrement avantageux dans le domaine de la fabrication des bracelets de montre, d'autant plus que l'apparence d'un bracelet réalisé de cette manière est très similaire à celle d'un bracelet en cuir conventionnel.

La description qui précède s'attache à décrire un exemple d'un mode de réalisation particulier, de manière non limitative, et l'invention n'est pas limitée aux techniques ou aux produits usuels particuliers mentionnés. L'homme du métier ne rencontrera pas de difficulté particulière pour adapter le contenu de la présente divulgation à ses propres besoins sans sortir du cadre de la présente invention.

On notera par exemple qu'un composé d'accrochage peut être appliqué à l'intérieur de l'enveloppe, pour améliorer encore davantage la force de la liaison entre elle et la matrice, sans sortir du cadre de la présente invention. L'homme du métier ne rencontrera pas de difficulté particulière pour choisir un tel type de composé d'accrochage (conventionnel) en fonction de ses besoins.

De manière générale, le présent procédé peut être mis à profit pour la fabrication d'éléments d'habillage de grandes dimensions, comme par exemple des éléments de sacs dans le domaine de la maroquinerie, sans sortir du cadre de l'invention.

On notera également que des densités différentes peuvent être obtenues en différents endroits d'un même élément d'habillage en introduisant des éléments de duretés différentes à l'intérieur du moule préalablement à l'application de la pression. De manière générale, on peut avantageusement prévoir que la dureté de la matrice peut varier globalement entre 20°ShA et 80°ShA.

## Revendications

1. Procédé de fabrication d'un élément d'habillage (1, 22) composite, préférablement souple, pour les domaines de l'horlogerie, de la bijouterie, de la lunetterie, de la téléphonie mobile ou de la maroquinerie, ledit élément d'habillage comportant une enveloppe (2, 26) souple associée à une matrice composée d'un polymère, comprenant les étapes consistant à:
a) se munir d'un moule (24) présentant une forme interne correspondant sensiblement à la forme finale souhaitée pour ledit élément d'habillage (1, 22),
b) se munir d'une enveloppe (2, 26) susceptible d'épouser au moins une partie de la surface interne dudit moule (24), et disposer ladite enveloppe (2, 26) dans ledit moule (24),
c) introduire une charge (4) à l'intérieur de ladite enveloppe (2, 26), d'une composition destinée à conduire à la formation dudit polymère suite à un traitement visant à activer la polymérisation et/ou la vulcanisation de ladite composition, ladite charge présentant un volume, à pression ambiante, supérieur au volume interne dudit moule (24),
d) soumettre ladite charge (4) à une pression supérieure à la pression ambiante, pour plaquer ladite enveloppe souple contre la surface interne dudit moule,
e) appliquer ledit traitement visant à activer la polymérisation et/ou la vulcanisation de ladite composition.

2. Procédé selon la revendication 1, **caractérisé en ce que** la charge (4) est injectée sous pression dans ladite enveloppe (2) après que ledit moule ait été fermé.

3. Procédé selon la revendication 2, **caractérisé en ce que** ladite enveloppe (2) présente au moins deux faces, délimitant un volume interne de ladite enveloppe (2) et, dont l'une au moins est munie d'une ouverture (16) adaptée pour permettre l'injection de ladite charge (4) à l'intérieur de ladite enveloppe (2).

4. Procédé selon la revendication 3, **caractérisé en ce qu'**un insert (18) rigide pourvu d'un trou (20) est solidaire de ladite enveloppe (2) de telle manière que ledit trou (20) est agencé sensiblement en regard de ladite ouverture (16).

5. Procédé selon la revendication 1, **caractérisé en ce que** l'étape d) est mise en oeuvre par compression de ladite charge (4) par fermeture dudit moule (24).

6. Procédé selon l'une des revendications précédentes, **caractérisé en ce que** ladite enveloppe souple (2) est réalisée en un ou plusieurs matériaux choisis dans le groupe comprenant les cuirs, les textiles naturels ou synthétiques, les métaux ou alliages métalliques, les céramiques.

7. Procédé selon l'une des revendications précédentes, **caractérisé en ce que** ladite matrice est composée d'un ou plusieurs matériaux choisis dans le groupe comprenant les élastomères, les matières siliconées, les matières plastiques.

8. Procédé selon l'une des revendications précédentes, **caractérisé en ce qu'**il comporte une étape supplémentaire de fabrication d'un élément d'habillage supplémentaire (32) consistant à effectuer un surmoulage de l'élément d'habillage (22) obtenu après mise en oeuvre de l'étape e) avec un composant constitué d'un ou plusieurs matériaux choisis dans le groupe comprenant les élastomères, les matières siliconées, les matières plastiques.

9. Procédé selon l'une des revendications précédentes mis en oeuvre avec un moule (24), une enveloppe (2, 26) et une matrice pour la fabrication d'un composant de bracelet, un composant de bijou, un composant de lunette, un composant de téléphone ou un composant de maroquinerie.

10. Procédé selon l'une des revendications précédentes, **caractérisé en ce qu'**un composé d'accrochage est appliqué à l'intérieur de ladite enveloppe (2, 26) préalablement à l'introduction de ladite charge (4) à l'étape c).

11. Elément d'habillage composite, préférablement souple (22, 32), pour les domaines de l'horlogerie, de la bijouterie, de la lunetterie, de la téléphonie mobile ou de la maroquinerie fabriqué par la mise en oeuvre d'un procédé de fabrication selon l'une des revendications précédentes.

## Patentansprüche

1. Verfahren zum Herstellen eines bevorzugt biegsamen dekorativen Verbundelements (1, 22) für die Gebiete der Uhrmacherei, der Juwelierarbeit, der Brillenherstellung, der Mobiltelefonie oder der Lederwaren, wobei das dekorative Element eine biegsame Hülle (2, 26) umfasst, die mit einem Kernteil verknüpft ist, das aus einem Polymer besteht, umfassend folgende Schritte:
a) Bereitstellen einer Gussform (24), die eine interne Form aufweist, die im Wesentlichen der endgültigen Form entspricht, die für das dekorative Element (1, 22) gewünscht ist,
b) Bereitstellen einer Hülle (2, 26), die sich mindestens an einen Teil der internen Oberfläche der Gussform (24) anpassen kann, und Anordnen der Hülle (2, 26) in der Gussform (24),
c) Einführen eines Füllstoffs (4) in die Hülle (2, 26) mit einer Mischung, die dazu gedacht ist, nach einer Behandlung, die dazu dient, die Polymerisierung und/oder Vulkanisierung der Mischung zu aktivieren, zum Bilden des Polymers zu führen, wobei der Füllstoff bei Umgebungsdruck ein Volumen aufweist, das größer als das interne Volumen der Gussform (24) ist,
d) Aussetzen des Füllstoffs (4) an einen Druck, der höher als der Umgebungsdruck ist, um die biegsame Hülle an die interne Oberfläche der Gussform zu pressen,
e) Anwenden der Behandlung zum Aktivieren der Polymerisierung und/oder der Vulkanisierung der Mischung.

2. Verfahren nach Anspruch 1, **dadurch gekennzeichnet, dass** der Füllstoff (4) unter Druck in die Hülle (2) eingespritzt wird, nachdem die Gussform geschlossen wurde.

3. Verfahren nach Anspruch 2, **dadurch gekennzeichnet, dass** die Hülle (2) mindestens zwei Seiten aufweist, die ein internes Volumen der Hülle (2) begrenzen und von denen mindestens eine mit einer Öffnung (16) versehen ist, die geeignet ist, um das Einspritzen des Füllstoffs (4) in die Hülle (2) zu ermöglichen.

4. Verfahren nach Anspruch 3, **dadurch gekennzeichnet, dass** ein mit einem Loch (20) versehenes steifes Einspritzteil (18) mit der Hülle (2) derart einstückig ist, dass das Loch (20) im Wesentlichen gegenüber der Öffnung (16) angeordnet ist.

5. Verfahren nach Anspruch 1, **dadurch gekennzeichnet, dass** der Schritt d) durch Zusammendrücken des Füllstoffs (4) durch Schließen der Gussform (24) umgesetzt wird.

6. Verfahren nach einem der vorhergehenden Ansprüche, **dadurch gekennzeichnet, dass** die biegsame Hülle (2) aus einem oder mehreren Materialien ausgebildet ist, das bzw. die aus der Gruppe ausgewählt wird bzw. werden, die Lederarten, natürliche oder synthetische Textilien, Metalle oder Metalllegierungen und Keramikarten umfasst.

7. Verfahren nach einem der vorhergehenden Ansprüche, **dadurch gekennzeichnet, dass** das Kernteil aus einem oder mehreren Materialien besteht, das bzw. die aus der Gruppe ausgewählt wird bzw. werden, die Elastomere, Silikonmaterialien und Kunststoffen umfasst.

8. Verfahren nach einem der vorhergehenden Ansprüche, **dadurch gekennzeichnet, dass** es einen zusätzlichen Schritt zum Herstellen eines zusätzlichen dekorativen Elements (32) umfasst, der darin besteht, ein Umspritzen des dekorativen Elements (22), das nach dem Schritt e) erzielt wird, mit einem Bestandteil, der aus einem oder mehreren Materialien besteht, das bzw. die aus der Gruppe ausgewählt wird bzw. werden, die Elastomere, Silikonmaterialien und die Kunststoffe umfasst, auszuführen.

9. Verfahren nach einem der vorhergehenden Ansprüche, das mit einer Gussform (24), einer Hülle (2, 26) und einem Kernteil für die Herstellung eines Bestandteils eines Armbands, eines Bestandteils eines Schmuckstücks, eines Bestandteils einer Brille, eines Bestandteils eines Telefons oder eines Bestandteils von Lederwaren umgesetzt wird.

10. Verfahren nach einem der vorhergehenden Ansprüche, **dadurch gekennzeichnet, dass** eine Haftzusammensetzung auf das Innere der Hülle (2, 26) vor der Einführung des Füllstoffs (4) in Schritt c) aufgetragen wird.

11. Bevorzugt biegsames dekoratives Element (22, 32) für die Gebiete der Uhrmacherei, der Juwelierarbeit, der Brillenherstellung, der Mobiltelefonie oder der Lederwaren durch Umsetzen eines Herstellungsverfahrens nach einem der vorhergehenden Ansprüche.

## Claims

1. A method for manufacturing a composite, preferably flexible trim element (1, 22) for the fields of watchmaking, jewellery, eyewear, mobile telephony, or leatherworking, said trim element comprising a flexible casing (2,26) associated with a matrix consisting of a polymer, comprising the steps consisting of:
a) providing oneself with a mold (24) having an internal shape substantially corresponding to the desired final shape for said trim element (1,22),
b) providing oneself with a casing (2, 26) which may fit at least one portion of the internal surface of said mold (24), positioning said casing (2, 26) in said mold (24),
c) introducing a load (4) inside said casing (2,26), with a composition intended to lead to the formation of said polymer subsequent to a treatment directed to activating the polymerization and/or the vulcanization of said composition, said load having a volume, at ambient pressure, greater than the internal volume of said mold (24),
d) subjecting said load (4) to a pressure above ambient pressure, in order to flatten said flexible casing against the internal surface of said mold,
e) applying said treatment directed to activating polymerization and/or vulcanization of said composition.

2. The method according to claim 1, **characterized in that** the load (4) is injected under pressure into said casing (2) after having closed said mold.

3. The method according to claim 2, **characterized in that** said casing (2) has at least two faces, delimiting an internal volume of said casing (2) and, at least one of which is provided with an adapted aperture (16) in order to allow the injection of said load (4) into the inside of said casing (2).

4. The method according to claim 3, **characterized in that** a rigid insert (18) provided with a hole (20) is secured to said casing (2) so that said hole (20) is substantially laid out facing said aperture (16).

5. The method according to claim 1, **characterized in that** step d) is applied by compression of said load (4) by closing said mold (24).

6. The method according to one of the preceding claims, **characterized in that** said flexible casing (2) is made in one or several materials selected from the group comprising leathers, natural or synthetic textiles, metals or metal alloys, ceramics.

7. The method according to one of the preceding claims, **characterized in that** said matrix consists of one or several materials selected from the group comprising elastomers, silicone materials, plastic materials.

8. The method according to one of the preceding claims, **characterized in that** it includes an additional step for manufacturing an additional trim element (32) consisting of carrying out overmolding of the trim element (22) obtained after applying step e) with a component consisting of one or several materials selected from the group comprising elastomers, silicone materials, plastic materials.

9. The method according to one of the preceding claims, applied with a mold (24), a casing (2, 26) and a matrix for manufacturing a bracelet component, a jewel component, an eyewear component, a telephone component or a leatherworking component.

10. The method according to one of the preceding claims, **characterized in that** an attachment compound is applied inside said casing (2, 26) before introducing the load (4) in step c).

11. A composite, preferably flexible (22, 32) trim element for the fields of watchmaking, jewellery, eyewear, mobile telephony, or leatherworking manufactured by applying a manufacturing method according to one of the preceding claims.
